(19) Europäisches Patentamt
European Patent Office
Office européen des brevets

(11) **EP 3 665 048 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**15.01.2025   Patentblatt 2025/03**

(45) Hinweis auf die Patenterteilung:
**23.06.2021   Patentblatt 2021/25**

(21) Anmeldenummer: **18749755.7**

(22) Anmeldetag: **27.07.2018**

(51) Internationale Patentklassifikation (IPC):
**B60T 8/17** *(2006.01)*        **B60T 13/66** *(2006.01)*
**B60T 17/22** *(2006.01)*

(52) Gemeinsame Patentklassifikation (CPC):
**B60T 17/228; B60T 8/17; B60T 8/1705;**
**B60T 13/66; B60T 13/665; B60T 17/22;**
B60T 2260/06; B60T 2270/86

(86) Internationale Anmeldenummer:
**PCT/EP2018/070435**

(87) Internationale Veröffentlichungsnummer:
**WO 2019/030022 (14.02.2019 Gazette 2019/07)**

(54) **VERFAHREN UND VORRICHTUNG ZUM BESTIMMEN VON VERÄNDERUNGEN IM LÄNGSDYNAMISCHEN VERHALTEN EINES SCHIENENFAHRZEUGS**

METHOD AND APPARATUS FOR DETERMINING CHANGES IN THE LONGITUDINAL DYNAMIC BEHAVIOUR OF A RAIL VEHICLE

PROCÉDÉ ET DISPOSITIF POUR DÉTERMINER DES MODIFICATIONS DANS LE COMPORTEMENT DE DYNAMIQUE LONGITUDINALE D'UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2017   DE 102017213970**

(43) Veröffentlichungstag der Anmeldung:
**17.06.2020   Patentblatt 2020/25**

(73) Patentinhaber:
• **KNORR-BREMSE Systeme für Schienenfahrzeuge GmbH 80809 München (DE)**
• **Deutsches Zentrum für Luft- und Raumfahrt e.V. 53227 Bonn (DE)**
Benannte Vertragsstaaten:
**DE FR**

(72) Erfinder:
• **SCHWARZ, Christoph 85386 Eching (DE)**
• **HECKMANN, Benjamin 85586 Poing (DE)**

(74) Vertreter: **Fink Numrich Patentanwälte PartmbB Paul-Gerhardt-Allee 24 81245 München (DE)**

(56) Entgegenhaltungen:
EP-B1- 2 981 832          WO-A1-2006/113954
DE-A1- 10 062 602         DE-A1- 102008 038 753
DE-A1- 102012 004 892     US-A1- 2007 001 629

EP 3 665 048 B2

**Beschreibung**

Die Erfindung beschreibt ein Verfahren und eine Vorrichtung zum Bestimmen von Veränderungen im längsdynamischen Verhalten, insbesondere eines Fahrwerks, eines Schienenfahrzeugs zur Identifikation eines aktuellen Fahrzustands des Schienenfahrzeugs. Ferner betrifft die Erfindung ein Computerprogrammprodukt.

Veränderungen im längsdynamischen Verhalten von Fahrwerken in Schienenfahrzeugen sind auf variierende Verschleißzustände, Relativbewegungen zwischen einzelnen Fahrwerkskomponenten und sich ändernde Umgebungsbedingungen, wie z.B. die Umgebungstemperatur, die Temperatur einzelner Komponenten des Fahrwerks, Feuchtigkeit, Verschmutzung, zurückzuführen. Die genannten Effekte haben überwiegend zwei längsdynamisch relevante Aspekte zur Folge. Zum einen sind dies Schwankungen des Reibwerts zwischen einer Bremsscheibe und einem der Bremsscheibe zugeordneten Bremsbelag oder einem Rad und einem dem Rad zugeordneten Bremsklotz. Zum anderen sind dies Schwankungen des Kraftschlusses zwischen einem Rad oder Radsatz und der Schiene, auf der sich das Schienenfahrzeug bewegt. Die Schwankungen der Längsdynamik können sowohl in einer Beschleunigungs- als auch in einer Bremsphase des Schienenfahrzeugs auftreten.

Hierzu ist es bei modernen Schienenfahrzeugen bekannt, eine Vielzahl von Sensoren vorzusehen und während einer Bremsung oder Beschleunigung ausgeübte Kräfte oder Momente zu erfassen. Die Kenntnis der Beschleunigungs- oder Bremskräfte oder Beschleunigungs- oder Bremsmomente kann für die Steuerung oder Regelung einer Bremsung oder Beschleunigung genutzt werden, um insbesondere Schleuder- (Durchdrehen) oder Blockierzustände von Rädern zu vermeiden und einen möglichst großen Kraftschluss zwischen und Rad und Schiene für die Bremsung oder Beschleunigung wirksam zu nutzen. Das Vorsehen einer Vielzahl von Sensoren an einem Schienenfahrzeug ist jedoch teuer und erfordert erhebliche Wartungsarbeiten, da diese unterschiedlichsten Umwelteinflüssen ausgesetzt sind.

Die Bestimmung eines potentiellen Bremsvermögens wird bei Schienenfahrzeugen üblicherweise auf der Basis von Parametern durchgeführt, die den schlimmsten zu erwartenden Zustand des Fahrzeugs darstellen, um stets ausreichend Sicherheitsreserven garantieren zu können. Dies hat den Nachteil, dass sich aus dem berechneten Bremsvermögen unter Umständen Bremsrestriktionen ergeben können, die den wirtschaftlichen Betrieb des Schienenfahrzeugs erschweren. Beispielsweise kann ein zu gering angenommenes Bremsvermögen zu einer unnötigen Geschwindigkeitsbegrenzung auf bestimmten Streckenabschnitten führen.

Aus der DE 10 2011 113 093 A1 ist eine Steuereinrichtung für eine Bremsanlage eines Schienenfahrzeugs bekannt, deren Bremsanlage eine kraftschlussabhängige Reibungsbremsvorrichtung umfasst. Die Steuereinrichtung ist dazu ausgelegt, eine während einer Bremsung ausgeübte Bremswirkung basierend auf einem Bremsdruck und mindestens einem weiteren Parameter zu bestimmen. Dadurch kann auf Bremskraftsensoren oder Bremsmomentensensoren zur Bestimmung der Bremswirkung verzichtet werden. Als weiterer Parameter wird insbesondere eine Verzögerung, eine Fahrzeuggeschwindigkeit oder mindestens eine Raddrehzahl erfasst, um basierend auf diesem die Fahrzeuggeschwindigkeit oder bei Veränderungen der Raddrehzahl eine Beschleunigung oder Verzögerung des zugeordneten Rads zu ermitteln.

Aus der WO 2015/128147 A1 ist ein Verfahren bekannt, mit dem eine praxisnahe Ermittlung des Bremsvermögens ermöglicht wird. Dies erfolgt dadurch, dass ein Zustandsmesswert ermittelt wird und bei der Berechnung des Bremsvermögens dieser Zustandsmesswert und mindestens ein weiterer Messwert herangezogen werden. Dies kann beispielsweise der Raddurchmesser oder die Fahrzeugmasse oder ein Luftdruck in der Luftfederung sein. Der weitere Messwert gibt den Zustand des Fahrzeugs oder einer Fahrzeugkomponente des Fahrzeugs an.

Existierende Kraftschlussregelungsverfahren gehen von bestimmten Annahmen bezüglich der Betriebsbedingungen im Hinblick auf die Verschmutzung der Schiene, klimatische Bedingungen und dergleichen aus und optimieren den Kraftschluss zwischen Rad und Schiene unter diesen Annahmen. Zwar können dadurch hohe Schlupfwerte vermieden werden. Jedoch wird zur Verbesserung der Adhäsion zwischen Rad und Schiene in der Regel gesandet. Dies führt wiederum zu einem erhöhten Verschleiß der Räder und Fahrschienen.

Aus der WO 2015/136117 A1 ist ein Verfahren bekannt, bei dem in einem Modus ein Kraftschluss optimiert und einem anderen Modus die Schlupfleistung reduziert wird. Bei Letzterem wird der Abrieb an der Kontaktfläche zwischen dem Rad und der Fahrschiene reduziert.

Diese aus dem Stand der Technik bekannten Verfahren sind damit auf die Kenntnis bestimmter Parameter angewiesen. Dadurch können diese Verfahren in Abhängigkeit des Fahrwerks und des Fahrwerksaufbaus unter Umständen nicht zum Einsatz gelangen. Aufgrund von teilweise schnell wechselnden Reibbedingungen ist darüber hinaus ein manuelles, erfahrungsbasiertes Regeln von Brems- bzw. Antriebskraft notwendig, um Bremswege einzuhalten und den Verschleiß der Radsätze und Schienen sowie der Antriebs- und Bremskomponenten gering zu halten.

Aus der WO 2006/113954 A1 ist ein Verfahren bekannt, bei dem während eines Bremsvorganges der momentane Ist-Schlupf zwischen zumindest einem Rad eines Schienenfahrzeuges und einer Schiene ermittelt, und weiters ein Soll-Schlupf zwischen dem zumindest einen Rad und der Schiene vorgegeben wird, und entsprechend der Abweichung des Ist-Schlupfes von dem vorgegebenen Soll-Schlupf der Bremszylinderdruck derart variiert wird, dass die Abweichung zwischen Soll- und Ist- Schlupf gegen Null geht oder minimiert wird.

Die DE 10 2012 004 892 A1 offenbart einen Beobachter für eine Bremseinrichtung eines Schienenfahrzeugs, wobei die Bremseinrichtung mindestens einen druckbetätigten Bremsaktuator umfasst, dem eine Steuerventileinrichtung vorgeschaltet ist. Der Beobachter ist dazu ausgebildet, basierend auf Druckdaten und Ansteuerungsdaten eine Abschätzung des am Bremsaktuator anliegenden Aktuatordrucks durchzuführen, wobei die Druckdaten mindestens einen stromaufwärts der Steuerventileinrichtung vorliegenden Druck repräsentieren und die Ansteuerungsdaten eine Ansteuerung der Steuerventileinrichtung repräsentieren. Ein ähnliches Verfahren ist aus der US 2007/0001629 A1 bekannt.

Es ist Aufgabe der Erfindung, ein Verfahren und eine Vorrichtung anzugeben, mit denen Veränderungen im längsdynamischen Verhalten eines Fahrwerks eines Schienenfahrzeugs auf einfachere Weise und unabhängig vom Fahrwerksaufbau bestimmt werden können.

Diese Aufgabe wird gelöst durch ein Verfahren gemäß den Merkmalen des Patentanspruchs 1, ein Computerprogrammprodukt gemäß den Merkmalen des Patentanspruchs 10 und eine Vorrichtung gemäß den Merkmalen des Patentanspruchs 11. Vorteilhafte Ausgestaltungen ergeben sich aus den abhängigen Patentansprüchen.

Es wird ein Verfahren zum Bestimmen von Veränderungen im längsdynamischen Verhalten eines Fahrwerks eines Schienenfahrzeugs zur Identifikation eines aktuellen Fahrzustands des Schienenfahrzeugs vorgeschlagen. Das Verfahren zeichnet sich dadurch aus, dass mittels eines regelungstechnischen Beobachters aus einem bekannten oder messtechnisch ermittelten Eingangssignal und zumindest einem weiteren Messsignal des beobachteten Schienenfahrzeugs als beobachtetes reales Referenzsystem durch ein Systemmodell des Schienenfahrzeugs nicht messbare und das längsdynamische Verhalten charakterisierende Größen rekonstruiert und ausgewertet werden, wobei das zumindest eine Messsignal des beobachteten Schienenfahrzeugs und ein entsprechendes rekonstruiertes Messsignal des Systemmodells verglichen und die mittels Vergleich ermittelte Abweichung mit einem Regler rekursiv nachgeführt wird, so dass die ermittelte Abweichung minimiert wird.

Durch die Nutzung eines regelungstechnischen Beobachters benötigt das vorgeschlagene Verfahren nur wenige Messsignale. Insbesondere können solche Messsignale verwendet werden, die bereits in einer konventionellen Brems- oder Antriebssteuerung verwendet werden. Das Verfahren erlaubt eine Charakterisierung der Fahrwerksdynamik in allen Antriebs- und Bremsszenarien, wie z.B. Vollbremsung, Betriebsbremsung und bei ausreichender Auflösung des zumindest einen Messsignals, auch Gleitschutzeingriff bei einem reibwertabhängigen Bremsen.

Die Möglichkeit, verschiedene sensorisch ermittelte Messsignale zu benutzen, erlaubt es, je nach Bauart des Fahrwerks eine einfach zugängliche und somit wartungsfreundliche und kostengünstige Ausführung zur Bestimmung von Veränderungen im längsdynamischen Verhalten zu realisieren. Durch die geringe Anzahl von benötigten Sensoren zur Bereitstellung des zumindest einen Messsignals und der Möglichkeit, diese flexibel zu positionieren, kann der Aufwand für Sensoren und für die Verlegung von Anschlussleitungen minimiert werden.

Das Verfahren kann für die Messung von Schwankungen in der Längsdynamik von Schienenfahrzeugen für deren Fahrwerke (z.B. Drehgestelle), von Personenzügen verwendet werden. Eine Anwendung in Güterwagenfahrwerken ist ebenso möglich, vorausgesetzt, es ist eine Stromversorgung für die zur Bereitstellung des zumindest eines Messsignals erforderlichen Sensoreinheiten gewährleistet.

Unter einem Schienenfahrzeug wird im Allgemeinen ein spurgebundenes Fahrzeug verstanden, wie eine Lokomotive, ein Triebzug, ein Triebwagen, eine Straßenbahn, ein U-Bahn-Fahrzeug, ein Wagon, wie ein Personen- bzw. Reisezug- und/oder Güterwagen.

Eine zur Verzögerung des Schienenfahrzeugs genutzte Bremse kann auf eine Bremsscheibe eines Rads oder eines Radsatzes oder auf die Lauffläche eines Rades (Klotzbremse) wirken. Dabei kann die Bremse mit einem Rad, einem Radsatz oder einer Mehrzahl von Rädern wirkverbunden sein. Die Bremse kann aus einer Mehrzahl von Bauteilen oder Elementen aufgebaut sein, insbesondere kann die Bremse eine Bremsscheibe, zumindest einen mit der Bremsscheibe wirkenden Bremsbelag, eine Bremszange, die wirkverbunden mit dem Bremsbelag ist, sowie einen Krafterzeuger umfassen. Die Bremszange kann mittels zweier Lagerstellen mit einer Konsole schwenkbar verbunden sein, wobei die zwei Lagerstellen in einem Lagerabstand voneinander angeordnet sind. Die Bremsscheibe weist eine Drehachse auf, die einen Abstand zu der (näheren) ersten der zwei Lagerstellen aufweist, wobei dieser Abstand als Einbaumaß bezeichnet werden kann. Dabei kann unter dem Einbaumaß ein horizontaler Abstand bezogen auf den Einbau verstanden werden. Die Konsole kann mit einem Chassis des Schienenfahrzeugs fest verbunden sein.

Eine Betätigung der Bremse kann in Reaktion auf ein Bremssignal erfolgen. Das Bremssignal kann ein Bremsanforderungssignal oder ein Signal einer Bremsanforderung darstellen. Bei einer Betätigung der Bremse kann ein Reibelement der Bremse, beispielsweise der Bremsbelag oder der Bremsklotz, einer bei der Drehung des Rads in Radumfangs- bzw. Radbewegungsrichtung des Rads oder Radsatzes des Schienenfahrzeugs wirkenden Kraft entgegenwirken. Auf diese Weise kann ein Bremsmoment von dem Bremsbelag auf die Bremsscheibe und somit auf das Rad oder von dem Bremsklotz auf das Rad erzeugt werden.

Die Bremse kann Teil einer pneumatischen, insbesondere einer elektropneumatischen, Bremsanlage oder einer hydraulischen, insbesondere einer elektrohydraulischen Bremsanlage sein. Eine solche Bremse kann mehrere wie oben beschriebene Bremsen umfassen. Die Bremse kann auch eine elektrisch betätigte Bremse sein, bei der ein elektrischer Bremsstrom in eine Bremskraft zur Betätigung von Reibelementen umgesetzt wird.

Zweckmäßigerweise wird das Eingangssignal nicht nur dem beobachteten realen Referenzsystem, sondern zusätzlich dem Systemmodell zugeführt, damit das Systemmodell, das das beobachtete reale Referenzsystem nachbildet, das Messsignal des Systemmodells rekonstruieren kann.

In einer zweckmäßigen Ausgestaltung werden das Eingangssignal und/oder das zumindest eine Messsignal an einer oder mehreren der folgenden Komponenten des Schienenfahrzeugs erfasst: an einem Wagenkasten; an einem Fahrwerk des Schienenfahrzeugs; (an zumindest einem Drehgestell des Schienenfahrzeugs;) an zumindest einem Radsatz des Schienenfahrzeugs. Die Erfassung des zumindest einen Messsignals mit einem jeweiligen Messsensor kann damit an verschiedenen Stellen des Schienenfahrzeugs erfolgen, z.B. solchen Stellen, welche je nach Bauart des Schienenfahrzeugs oder Fahrwerks besonders einfach zugänglich und/oder vor Umwelteinflüssen geschützt sind. Dadurch lässt sich die Vorrichtung besonders wartungsfreundlich und kostengünstig realisieren.

Zweckmäßigerweise ist vorgesehen, dass das zumindest eine Messsignal zeitgleich auf gegenüberliegenden Seiten des Fahrwerks oder des Wagenkastens oder des Radsatzes erfasst wird. Die Kombination zweier Sensoreinheiten an seitlich gegenüberliegenden Stellen des Fahrwerks oder des Wagenkastens oder des Radsatzes ermöglicht es, die Einflüsse einer Bogenfahrt eindeutig von längsdynamischen Effekten einer Bremsung oder Beschleunigung des Schienenfahrzeugs zu trennen.

Als das Eingangssignal können ein Bremsdruck eines Bremsaktuators oder ein Bremsstrom zur Erzeugung einer das Schienenfahrzeug verlangsamenden Bremskraft verarbeitet werden. Die Bremskraft kann dann in Abhängigkeit von einer, durch Anpressen eines durch den Bremsaktuator bewegten Bremsbelags oder Bremsklotzes auf eine Bremsscheibe oder auf ein Rad erzeugten, Normalkraft und von einem Reibwert entstehen. Hierdurch ist es möglich, Veränderungen im längsdynamischen Verhalten bei einem Bremsvorgang zu ermitteln.

Wird als das Eingangssignal eine Antriebskraft oder ein Motorstrom zur Erzeugung einer das Schienenfahrzeug beschleunigenden Kraft verarbeitet, so kann ein Antriebsszenario, bei der das Schienenfahrzeug beschleunigt wird, bewertet werden.

Als das zumindest eine Messsignal kann eine Vielzahl von unterschiedlichen Messgrößen mit Hilfe eines oder mehrerer Messsensoren erfasst werden. Ebenso ist eine Kombination gleicher oder unterschiedlicher Messsignale möglich.

Als das zumindest eine Messsignal kann z.B. eine Drehzahl oder Drehzahländerung zumindest eines Radsatzes erfasst werden. Die messtechnische Erfassung einer Drehzahl oder Drehzahländerung ermöglicht eine hochpräzise Bestimmung der das längsdynamische Verhalten charakterisierenden Größen, da die Drehzahl oder Drehzahländerung unmittelbar mechanisch mit den das längsdynamische Verhalten charakterisierenden Größen zusammenhängen.

Als das zumindest eine Messsignal kann alternativ oder zusätzlich eine Dehnung eines eine Längskraft übertragenden Bauteils, insbesondere einer Zug-/Druckstange oder eines Drehzapfens oder eines Lemniskatenlenkers oder einer Radsatzführung, verarbeitet werden. Dehnungen können beispielsweise durch einen Messstreifen und andere bekannte Sensoreinheiten erfasst werden.

Als das zumindest eine Messsignal kann alternativ oder zusätzlich ein Federweg in einer oder mehreren Federungsstufen verarbeitet werden. Federwege können z. B. mit Hilfe von optischen Sensoreinheiten, einer Seilzugmessung oder induktiv arbeitenden Tauchankern erfasst werden.

Die Auswertung der das längsdynamische Verhalten charakterisierenden Größen umfasst erfindungsgemäß einen Vergleich der Größen von aufeinanderfolgenden Fahrwerken oder Wagenkasten oder Radsätzen. So werden Informationen von in Fahrtrichtung des Schienenfahrzeugs vorauslaufenden Fahrwerken, wie z.B. geänderte Bedingungen bezüglich des Kontakts zwischen Rad und Schiene, als Vorhersage für nachfolgende Fahrwerke verarbeitet wird. Durch einen Vergleich der Resultate von aufeinanderfolgenden Fahrwerken oder Wagenkasten oder Radsätzen wird ermittelt, ob Veränderungen im längsdynamischen Verhalten streckenbedingt sind oder fahrzeugseitige Ursachen haben. Änderungen im längsdynamischen Verhalten, die zeitversetzt an mehreren Fahrwerken oder Wagenkasten oder Radsätzen auftreten, lassen auf streckenseitige Einflüsse schließen. Hierzu zählen beispielsweise witterungsbedingte Änderungen des Reibwertes beim Kontakt zwischen Rad und Schiene. Veränderungen im längsdynamischen Verhalten, die demgegenüber nur bei einzelnen Fahrwerken oder Wagenkasten oder Radsätzen auftreten, lassen auf fahrzeugseitige Einflüsse des betreffenden Fahrwerks oder Wagenkastens oder Radsatzes schließen.

Damit erlaubt das Verfahren bezüglich des Verschleißes von Rädern oder Bremseinheiten eine kontinuierliche Überwachung, da fortwährend Änderungen im längsdynamischen Verhalten erfasst und aufgezeichnet werden (können).

Das Verfahren ist besonders für solche Schienenfahrzeuge geeignet, bei denen quasistatische Umgebungsbedingungen vorliegen oder der qualitative, zeitliche Verlauf der Änderungen bekannt ist. Obwohl es insbesondere für Fahrwerke und Radsätze von Personenzügen bevorzugt einsetzbar ist, ist eine Anwendung in Güterwagenfahrwerken ebenso möglich, vorausgesetzt eine Stromversorgung der Vorrichtung zum Bestimmen von Veränderungen im längsdynamischen Verhalten, insbesondere der Steuereinheit und der zumindest einen Sensoreinheit, ist sichergestellt.

Das Verfahren schafft ferner ein Computerprogrammprodukt, das direkt in den internen Speicher einer digitalen Steuereinheit geladen werden kann und Softwarecodeabschnitte umfasst, mit denen die Schritte des hierin beschriebenen Verfahrens ausgeführt werden, wenn das Produkt auf der Steuereinheit läuft. Das Computerprogrammprodukt kann in Gestalt einer CD-ROM, einer DVD, eines USB-Sticks oder anderen Speichermedien verkörpert sein. Das Computerprogrammprodukt kann auch in der Form eines über ein (drahtloses oder leitungsgebundenes) Netzwerk ladbares Signal vorliegen.

Die Erfindung schafft ferner eine Vorrichtung zum Bestimmen von Änderungen im längsdynamischen Verhalten, insbesondere eines Fahrwerks, eines Schienenfahrzeugs zur Identifikation eines aktuellen Fahrzustandes des Schienenfahrzeugs. Die Vorrichtung umfasst eine Steuereinheit und zumindest eine Sensoreinheit zur Bereitstellung eines jeweiligen Messsignals. Die Steuereinheit ist dazu ausgebildet, mittels eines regelungstechnischen Beobachters aus einem bekannten oder messtechnisch ermittelten Eingangssignal und dem zumindest einen Messsignal des beobachteten Schienenfahrzeugs als beobachtetes reales Referenzsystem durch ein Systemmodell des Schienenfahrzeugs nicht messbare und das längsdynamische Verhalten charakterisierende Größen zu rekonstruieren und auszuwerten. Die Steuereinheit ist weiter dazu ausgebildet, das zumindest eine Messsignal des beobachteten Schienenfahrzeugs und ein entsprechendes rekonstruiertes Messsignal des Systemmodells zu vergleichen und die mittels Vergleich ermittelte Abweichung mit einem Regler rekursiv nachzuführen, so dass die ermittelte Abweichung minimiert wird.

Die erfindungsgemäße Vorrichtung weist die gleichen Vorteile auf, wie diese vorstehend in Verbindung mit dem erfindungsgemäßen Verfahren beschrieben wurden.

Zusammenfassend sieht die vorliegende Erfindung die Kombination verschiedener Sensorsignale in einem regelungstechnischen Beobachter vor. Mittels des regelungstechnischen Beobachters ist es möglich, durch die Synthese eines bekannten oder messtechnisch ermittelten Eingangssignals und zumindest eines Messsignals sowie einer modellbasierten Schätzung der Dynamik des Schienenfahrzeugs eindeutig den aktuellen Fahrzustand des Schienenfahrzeugs zu identifizieren.

Die anhand des modellbasierten Ansatzes ermittelte Dynamik des Fahrwerks des Schienenfahrzeugs wird über einen Abgleich mit den messtechnisch erfassten Messsignalen rekursiv angepasst, so dass die berechnete Dynamik mit der tatsächlichen Dynamik des Schienenfahrzeugs korreliert. Das Verfahren erlaubt eine Charakterisierung der Fahrwerksdynamik in allen Antriebs- und Bremsszenarien, wie z.B. Vollbremsung, Betriebsbremsung sowie Gleitschutzeingriff bei reibwertabhängigem Bremsen.

Die Erfindung wird nachfolgend näher anhand eines Ausführungsbeispiels erläutert. Es zeigen:

Fig. 1   eine schematische Darstellung eines Blockschaltbilds eines regelungstechnischen Beobachters, wie er in dem erfindungsgemäßen Verfahren zum Einsatz kommt;

Fig. 2   eine graphische Darstellung, die einen Vergleich eines tatsächlichen und eines mittels des erfindungsgemäßen Verfahrens ermittelten Reibwerts in Abhängigkeit der Zeit zeigt; und

Fig. 3   eine Graphik, welche eine zeitabhängige, translatorische Längsgeschwindigkeit des Schienenfahrzeugs in Abhängigkeit des in Fig. 2 gezeigten Reibwertverlaufs zeigt.

Das nachfolgend beschriebene Verfahren zum Bestimmen von Veränderungen im längsdynamischen Verhalten kommt bei einem in den Figuren nicht näher gezeigten Schienenfahrzeug zum Einsatz. Ein solches Schienenfahrzeug weist ein oder mehrere Glieder auf, die miteinander beweglich verbunden sind. Zum Verbinden der Fahrzeugglieder ist eine Kopplungsvorrichtung vorgesehen. Je nach Ausgestaltung des Schienenfahrzeugs, kann jedes Fahrzeugglied zwei Fahrwerke aufweisen, an denen jeweils zumindest ein Radsatz vorgesehen ist. Alternativ kann ein Schienenfahrzeug mit zwei Fahrzeuggliedern auch drei Fahrwerke aufweisen, an denen jeweils zumindest ein Radsatz vorgesehen ist. Üblicherweise umfasst ein Fahrwerk zwei Radsätze. An den Radsätzen der Fahrwerke sind jeweils Räder vorgesehen, die auf einer Schiene laufen.

An dem Schienenfahrzeug kann eine Vielzahl von Sensoreinheiten (kurz: Sensoren) vorgesehen sein. Das Schienenfahrzeug kann z.B. einen oder mehrere Sensoren zur Bestimmung der Fahrzeuggeschwindigkeit und/oder einer Beschleunigung oder Verzögerung des Schienenfahrzeugs in Fahrzeuglängsrichtung aufweisen. Die Beschleunigung kann eine positive Beschleunigung in Folge einer das Schienenfahrzeug beschleunigenden Kraft oder eine negative Beschleunigung in Folge einer das Schienenfahrzeug verlangsamenden Bremskraft sein. Die (positive oder negative) Beschleunigung kann eine Gesamtbeschleunigung des Schienenfahrzeugs sein. Ist ein Beschleunigungssensor an einem jeweiligen Fahrzeugglied angebracht, kann die Beschleunigung auch die jeweilige (positive oder negative) Beschleunigung des jeweiligen Fahrzeugglieds sein. Die Beschleunigung kann beispielsweise eine an einem Fahrwerk oder an einem Wagenkasten des Schienenfahrzeugs auftretende Verzögerung sein. Die Beschleunigung kann basierend auf Geschwindigkeitsdaten bestimmt werden. Aus einem zeitlichen Verlauf und/oder einer Änderung der Fahrzeuggeschwindigkeit lässt sich auf die Verzögerung schließen. Dabei kann die Verzögerung dadurch bestimmt werden, dass der Verlauf der Geschwindigkeit in Zeitabschnitten betrachtet wird, die kleiner sind als die Dauer einer (positiven oder negativen) Beschleunigung. Es kann somit vorgesehen sein, dass jedem Fahrzeugglied und/oder jedem Fahrwerk mindestens ein Beschleunigungssensor zugeordnet ist. Derartige Sensoren sind häufig zur Überwachung von Fahrtzuständen vorgesehen, so dass bereits vorhandene Sensoren verwendet werden können, um die (positive oder negative) Beschleunigung zu bestimmen.

Zum Bestimmen der Fahrzeuggeschwindigkeit können beispielsweise eine Radaranlage, eine optische Sensoreinrichtung und/oder eine Kommunikationseinrichtung zum Empfangen von Satellitendaten vorgesehen sein, mit welcher eine Steuereinrichtung des Schienenfahrzeugs verbindbar oder verbunden sein kann.

Darüber hinaus können Sensoren zur Bestimmung von Drehzahlen und Drehzahländerungen zumindest eines Radsatzes vorgesehen sein. Die Bestimmung der Raddrehzahl kann beispielsweise zur Bestimmung einer Bremswirkung verwendet werden und ist in vielen Schienenfahrzeugen bereits verbaut. Ebenso ist vorstellbar, dass die Fahrzeuggeschwindigkeit basierend auf Raddrehzahldaten bestimmt wird. Dabei kann aus einzelnen Rädern oder Radsätzen zugeordneten Raddrehzahldaten eine dem zugeordneten Rad oder der zugeordneten Radachse zugeordnete Geschwindigkeit, beispielsweise eine Umlaufgeschwindigkeit oder Radgeschwindigkeit, bestimmt werden. Neben Raddrehzahldaten kann der Radius des Rads berücksichtigt werden.

Aus einer Raddrehzahländerung zumindest eines Radsatzes kann beispielsweise auf eine (positive oder negative) Beschleunigung bei einem zugeordneten Radsatz oder einer zugeordneten Radachse geschlossen werden.

Ein derartiges Schienenfahrzeug kann mit Sensoreinheiten zur Erfassung von Nickbewegungen einzelner Bauteile um die Fahrzeugquerachse versehen sein. Derartige Sensoreinheiten sind vorzugsweise einer jeweiligen Fahrzeugquerachse zugeordnet. Beispielsweise können hierzu Beschleunigungssensoren verwendet werden, welche eine Beschleunigung um die Fahrzeugquerachse erfassen.

Das Schienenfahrzeug kann darüber hinaus mit zumindest einer Sensoreinheit versehen sein, welche einen Federweg in jeweiligen Federungsstufen eines Fahrzeugglieds des Schienenfahrzeugs erfasst. Derartige Sensoren können optisch, mittels Seilzugmessung oder durch induktive Tauchanker realisiert sein.

Mittels Längskraftsensoren, z.B. Dehnungsmessstreifen, können Dehnungen von längskraftübertragenden Bauteilen ermittelt werden. Eine derartige Sensoreinheit kann einer jeweiligen Zug-/Druck-Stange, einem jeweiligen Drehzapfen oder Lemniskatenlenker oder einer jeweiligen Radsatzführung zugeordnet sein.

Ferner können den Fahrwerken oder den an den Fahrwerken angeordneten Reibbremseinrichtungen einer kraftschlussabhängigen Reibungsbremsvorrichtung zugeordnete Bremsdrucksensoren oder Bremsstromsensoren und/oder Bremswirkungssensoren wie Bremskraft- oder Bremsmomentsensoren vorgesehen sein. Allgemein kann ein Bremsdrucksensor oder Bremsstromsensor als einer Reibbremseinrichtung zugeordnet angesehen werden, wenn er es vermag, einen individuell die Reibbremseinrichtung betätigenden Bremsdruck oder Bremsstrom zu erfassen. Ein Bremskraftsensor oder ein Bremsmomentsensor kann als einer Reibbremseinrichtung oder einem durch die Reibbremseinrichtung zu bremsenden Radsatz zugeordnet angesehen werden, wenn er es vermag, eine durch die Reibbremseinrichtung ausgeübte Bremskraft oder ein entsprechendes Bremsmoment zu erfassen.

Mittels des nachfolgend beschriebenen regelungstechnischen Beobachters ist es möglich, die in einem Zugverband eines Schienenfahrzeugs häufig unterschiedlichen Fahrwerksaufbauten mit einem einheitlichen Modell-basierten Algorithmus abzubilden. Eine eindeutige Abschätzung der Fahrwerksdynamik des Schienenfahrzeugs kann durch eine Kombination einer Mehrzahl von Messsignalen sichergestellt werden.

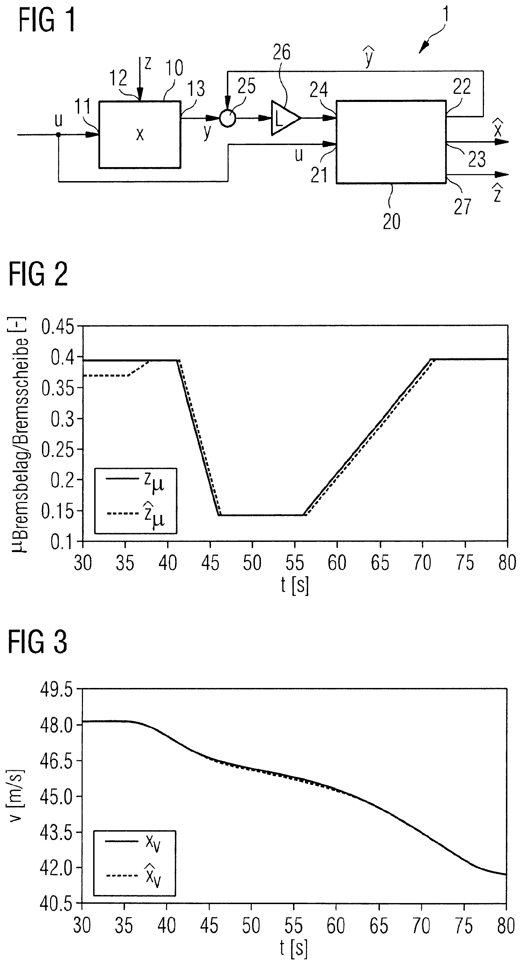

Fig. 1 zeigt ein Blockschaltbild des grundlegenden Aufbaus eines regelungstechnischen Beobachters 1, mit dessen Hilfe das Verfahren zum Bestimmen von Veränderungen im längsdynamischen Verhalten des Schienenfahrzeugs durchgeführt wird. In einer dem Fachmann bekannten Weise besteht der regelungstechnische Beobachter 1 aus einem Systemmodell 20 des Schienenfahrzeugs sowie einer Einheit 26 zur Gewichtung des Vergleichsergebnisses von dem Systemmodell 20 und einem beobachteten realen Referenzsystem 10. Die Dynamik des beobachteten realen Referenzsystems 10, d.h. des beobachteten Schienenfahrzeugs, wird durch ein Eingangssignal u beeinflusst, das dem beobachteten realen Referenzsystem 10 an einem ersten Eingang 11 zugeführt wird. Das Eingangssignal u ist ein messbares Signal. Im Falle einer Bremsung des Schienenfahrzeugs mit Reibungsbremsen kann das Eingangssignal u einem Bremsdruck der Bremsanlage/-einrichtung entsprechen. Erfolgt die Bremsung mit Hilfe einer elektrischen Bremse, so kann das Eingangssignal ein Bremsstrom zur Erzeugung einer das Schienenfahrzeug verlangsamenden Bremskraft sein. Soll demgegenüber eine Veränderung im längsdynamischen Verhalten aufgrund einer Beschleunigung erfasst werden, so kann das Eingangssignal u eine Antriebskraft oder ein Motorstrom zur Erzeugung der das Schienenfahrzeug beschleunigenden Kraft sein.

Die Dynamik des beobachteten realen Referenzsystems 10 ist durch Zustände x beschrieben. x kann dabei ein Vektor mit einer Vielzahl verschiedener Zustände sein. Da das beobachtete reale Referenzsystem 10 mit zumindest einer, wie oben beschriebenen Sensoreinheit versehen ist, wird zumindest ein Messsignal y an einem Ausgang 13 zur Verfügung gestellt. y kann dabei ein Vektor sein, dessen Anzahl an Vektoreinträgen der Anzahl an (realen) Messsignalen entspricht. Die dabei erfassten Messsignale können von Sensoreinheiten des gleichen und/oder eines unterschiedlichen Typs stammen.

Das beobachtete reale Referenzsystem 10, d.h. das Schienenfahrzeug, kann ferner durch nicht messbare Störungen z angeregt werden. Diese nicht messbaren Störungen z werden dem Referenzsystem 10 an einem zweiten Eingang 12 zugeführt. Als Störgröße z sind alldiejenigen Einflüsse zu verstehen, die den Reibwert zwischen Rad und Schiene und/oder zwischen Bremsbelag und Bremsscheibe und/oder Bremsklotz und Rad beeinflussen. Darunter fallen auch diejenigen Einflüsse, die den Reibradius, d.h. den Angriffspunkt eines Bremsbelags an der Bremsscheibe, beeinflussen. Ferner kann ein sich änderndes Gesamtgewicht infolge eines sich ändernden Beladungszustands des Referenzsystems 10, d.h. des Schienenfahrzeugs, als eine Störgröße z auftreten.

Das Systemmodell 20 stellt ein Modell des dynamischen Verhaltens des Referenzsystems 10, d.h. des Schienenfahrzeugs, dar. Das Systemmodell 20 kann beispielsweise durch eine Software gebildet sein. Das Systemmodell 20 wird, wie das Referenzsystem 10, durch das Eingangssignal u gesteuert. Das Eingangssignal u wird dem Systemmodell 20 an einem ersten Eingang 21 zugeführt. Das Systemmodell 20 ermittelt Werte für das zumindest eine rekonstruierte Messsignal ŷ, welches, z.B. ebenfalls als Vektor, an einem ersten Ausgang 22 zur Verfügung gestellt wird. Ein jeweils rekonstruierter Vektoreintrag des Messsignals ŷ ist einem messtechnisch ermittelten Vektoreintrag des Messsignals y des Referenzsystems 10 zugeordnet.

Nachdem das Systemmodell 20 in der Regel nicht die gesamte Dynamik des Referenzsystems 10 abbilden kann und zudem das Referenzsystem 10 durch die nicht messbaren Störgrößen z beeinflusst wird, weicht das dynamische Verhalten des Systemmodells 20 a priori vom realen Verhalten des Referenzsystems 10 ab. Aus diesem Grund, erfolgt ein Vergleich des zumindest einen rekonstruierten Messsignals ŷ (d.h. dessen Vektoreinträge) mit dem messtechnisch ermittelten zumindest einen Messsignal y (d.h. den zugeordneten Vektoreinträgen), das an dem Ausgang 13 des Referenzsystems 10 zur Verfügung gestellt wird. Diese beiden Messsignale werden einem Vergleicher 25 zugeführt, welcher eine Differenzbildung vornimmt. Die Abweichung (y- ŷ) wird einer Einheit 26 zur Gewichtung des Vergleichsergebnisses zugeführt. Die mit L gewichtete Rückführung der Abweichung (y-ŷ) wird dem Systemmodell 20 an einem zweiten Eingang 24 zur Verfügung gestellt. Die Gewichtung durch die Einheit 26 erfolgt derart, dass das von dem Systemmodell 20 berechnete Verhalten des rekonstruierten Messsignals ŷ nach einer gewissen Zeit mit dem real gemessenen zumindest einen Messsignal y übereinstimmt, d.h. die Abweichung nach einer gewissen Zeit zu Null wird. Dieser Vorgang wird automatisiert und rekursiv durchgeführt.

An einem zweiten Ausgang 23 des Systemmodells 20 können dann die gewünschten dynamischen Größen x̂, welche das längsdynamische Verhalten des Schienenfahrzeugs repräsentieren, ausgelesen werden. Dies sind beispielsweise nicht messbare Größen, wie z. B. Geschwindigkeiten sowie Reibwerte zwischen Rad und Schiene sowie zwischen Bremsbelag und Bremsscheibe, Bremskräfte und Bremsmomente und dergleichen. Ferner können an einem dritten Ausgang 27 des Systemmodells 20 die Störgrößen ẑ ausgelesen werden.

Die Fig. 2 und 3 zeigen anhand von Simulationsergebnissen das Ergebnis des Verfahrens anhand eines Bremsvorgangs. Fig. 2 zeigt dabei den Reibwertverlauf $\mu(t)$ zwischen Bremsbelag und Bremsscheibe in Abhängigkeit der Zeit t. Fig. 3 zeigt die Veränderung der Längsgeschwindigkeit $v(t)$ in Abhängigkeit des gleichen Zeitraums. Dargestellt ist ein Zeitraum von t = 30s bis t = 80s. Es wird davon ausgegangen, dass innerhalb des Zeitraums von t = 35s bis t = 80s ein Schienenfahrzeugradsatz mit einem konstanten Bremsdruck gebremst wird. Die in den Fig. 2 und 3 mit durchgezogener Linie dargestellten Verläufe $z_\mu$, $x_v$ zeigen jeweils die zeitlichen Verläufe des Streckenmodells, während die durchbrochen dargestellten Linien berechnete Werte $\widehat{z_\mu}$, $\widehat{x_v}$ des Systemmodells 20 darstellen. In diesem Beispiel wird davon ausgegangen, dass neben der Radsatzdrehzahl $\omega$ die translatorische Längsgeschwindigkeit v eines Radsatzes gemessen wird, d.h. als Messsignale y an dem Ausgang 13 des Referenzsystems 10 zur Verfügung stehen.

Fig. 2 zeigt den zeitlichen Verlauf des Reibwertes $\mu$ zwischen dem Bremsbelag und der Bremsscheibe, wie er sich aufgrund von schwankenden Einflüssen während der Bremsung mit konstantem Bremsdruck ergibt. Die dargestellte Schwankung des tatsächlichen Reibwerts (durchgezogene Linie) wird anhand der oben beschriebenen Rückführung der Abweichung (y-ŷ) und der (durch numerische Simulation, Versuche oder Berechnung) gewählten Auslegung der Einheit 26 zur Gewichtung des Vergleichsergebnisses von dem Systemmodell abgebildet. Die Längsgeschwindigkeit v als einer der Zustände x des Referenzsystems 10 und als eine der das längsdynamische Verhalten charakterisierenden Größen x̂ des Systemmodells 20 ist in Fig. 3 illustriert. Die Rückführung der Abweichung (y-ŷ) des am Ausgang 13 verfügbaren gemessenen Messsignals y und des rekonstruierten Messsignals ŷ am ersten Ausgang 22 des Systemmodells führt dazu, dass die von dem Systemmodell 20 berechnete Bewegung mit dem tatsächlichen Systemverhalten korreliert.

Der Effekt des verminderten Reibwerts $\mu$ zwischen t = 40s und t = 70s führt dazu, dass die Längsgeschwindigkeit v im genannten Zeitbereich weniger schnell abnimmt, was zu einem verlängerten Bremsweg führt und somit ein Sicherheitsrisiko darstellen kann.

Im gezeigten Beispiel erlaubt die Anwendung des Verfahrens den nötigen Bremsdruck auf Grundlage des berechneten Reibwerts $\mu$ zwischen Bremsbelag und Bremsscheibe zu bestimmen, der zur Einhaltung eines vorgeschriebenen Bremswegs notwendig ist. Diese Bestimmung erfolgt in einer Steuereinheit, dessen Ausgestaltung und Verfahren nicht Gegenstand der vorliegenden Erfindung ist.

Des Weiteren lässt die Kenntnis des Reibwerts $\mu$ Rückschlüsse auf den Verschleißzustand des Bremsbelags zu, was eine zustandsorientierte Wartung ermöglicht.

Die so ermittelten Informationen von vorlaufenden Radsätzen oder Fahrwerken oder Wagenkästen können in geeigneter Weise als Vorhersage für nachfolgende Radsätzen oder Fahrwerke oder Wagenkästen zur Verfügung gestellt werden. Diese Auswertung erfolgt ebenfalls in einer Steuereinheit und ist nicht Gegenstand der vorliegenden Betrachtung. Durch einen Vergleich der Resultate von aufeinanderfolgenden Radsätzen oder Fahrwerken oder Wagenkästen wird dann ersichtlich, ob es sich um streckenbedingte Einflüsse oder um fahrzeugseitige Effekte handelt. Änderungen, die zeitversetzt an mehreren Sensoreinheiten detektiert werden, lassen auf streckenseitige Einflüsse schließen. Schwankungen, die nur bei einzelnen Sensoreinheiten auftreten, lassen demgegenüber auf fahrzeugseitige Einflüsse schließen.

Bezugszeichenliste

1      regelungstechnischer Beobachter
10      beobachtetes reales Referenzsystem
11      erster Eingang für Eingangssignal u
12      zweiter Eingang für Störsignal z
13      Ausgang für Messsignal y

20      Systemmodell
21      erster Eingang für Eingangssignal u
22      erster Ausgang für rekonstruiertes Messsignal $\hat{y}$
23      zweiter Ausgang für beobachtete Größe(n) $\hat{x}$
24      zweiter Eingang
25      Vergleicher
26      Einheit zur Gewichtung des Vergleichsergebnisses
27      dritter Ausgang für rekonstruierte Störgröße(n) $\hat{z}$

u      Eingangssignal

y      Messsignal
x      Zustandsgröße
$\hat{y}$      rekonstruiertes Messsignal
$\hat{x}$      rekonstruierte Zustandsgröße
z      Störgröße
$\hat{z}$      rekonstruierte Störgröße

**Patentansprüche**

**1.** Verfahren zum Bestimmen von Veränderungen im längsdynamischen Verhalten eines Fahrwerks eines Schienenfahrzeugs zur Identifikation eines aktuellen Fahrzustandes des Schienenfahrzeugs,

wobei mittels eines regelungstechnischen Beobachters (1) aus einem bekannten oder messtechnisch ermittelten Eingangssignal (u) und zumindest einem Messsignal (y) des beobachteten Schienenfahrzeugs als beobachtetes reales Referenzsystem (10) durch ein Systemmodell (20) des Schienenfahrzeugs nicht messbare und das längsdynamische Verhalten charakterisierende Größen rekonstruiert und ausgewertet werden, wobei das zumindest eine Messsignal (y) des beobachteten Schienenfahrzeugs (10) und ein entsprechendes rekonstruiertes Messsignal (ŷ) des Systemmodells (20) verglichen und die mittels Vergleich ermittelte Abweichung mit einem Regler rekursiv nachgeführt wird, so dass die ermittelte Abweichung minimiert wird,
wobei die Auswertung der das längsdynamische Verhalten charakterisierenden Größen einen Vergleich der Größen von aufeinander folgenden Fahrwerken umfasst,
**dadurch gekennzeichnet, dass**
durch den Vergleich der Resultate von aufeinanderfolgenden Fahrwerken ermittelt wird, ob Veränderungen im längsdynamischen Verhalten streckenbedingt sind oder fahrzeugseitige Ursachen haben, wobei bei Änderungen im längsdynamischen Verhalten, die zeitversetzt an mehreren Fahrwerken auftreten, auf streckenseitige Einflüsse geschlossen wird, und bei Veränderungen im längsdynamischen Verhalten, die nur bei einzelnen Fahrwerken auftreten, auf fahrzeugseitige Einflüsse des betreffenden Fahrwerks geschlossen wird.

**2.** Verfahren nach Anspruch 1, **dadurch gekennzeichnet, dass** das Eingangssignal (u) zusätzlich dem Systemmodell (20) zugeführt wird.

**3.** Verfahren nach einem der vorhergehenden Ansprüche, **dadurch gekennzeichnet, dass** das Eingangssignal (u) und/oder das zumindest eine Messsignal (y) an einer oder mehreren der folgenden Komponenten erfasst werden:

- einem Wagenkasten;
- einem Fahrwerk des Schienenfahrzeugs;
- zumindest einem Drehgestell des Schienenfahrzeugs;
- zumindest einem Radsatz des Schienenfahrzeugs.

4. Verfahren nach Anspruch 3, **dadurch gekennzeichnet, dass** das zumindest eine Messsignal (y) zeitgleich auf gegenüberliegenden Seiten des Fahrwerks oder des Drehgestells oder des Radsatzes erfasst wird.

5. Verfahren nach einem der vorhergehenden Ansprüche, **dadurch gekennzeichnet, dass** als das Eingangssignal (u) ein Bremsdruck eines Bremsaktuators oder ein Bremsstrom zur Erzeugung einer das Schienenfahrzug verlangsamenden Bremskraft verarbeitet wird.

6. Verfahren nach einem der vorhergehenden Ansprüche, **dadurch gekennzeichnet, dass** als das Eingangssignal (u) eine Antriebskraft oder ein Motorstrom zur Erzeugung einer das Schienenfahrzug beschleunigenden Kraft verarbeitet wird.

7. Verfahren nach einem der vorhergehenden Ansprüche, **dadurch gekennzeichnet, dass** als das zumindest eine Messsignal (y) eine Drehzahl oder Drehzahländerung zumindest eines Radsatzes verarbeitet wird.

8. Verfahren nach einem der vorhergehenden Ansprüche, **dadurch gekennzeichnet, dass** als das zumindest eine Messsignal (y) eine Dehnung eines eine Längskraft übertragenden Bauteils, insbesondere einer Zug-/Druckstange oder eines Drehzapfens oder eines Lemniskatenlenkers oder einer Radsatzführung, verarbeitet wird.

9. Verfahren nach einem der vorhergehenden Ansprüche, **dadurch gekennzeichnet, dass** als das zumindest eine Messsignal (y) ein Federweg in einer oder mehreren Federungsstufen verarbeitet wird.

10. Computerprogrammprodukt, das direkt in den internen Speicher einer digitalen Steuereinheit geladen werden kann und Softwarecodeabschnitte umfasst, mit denen die Schritte gemäß einem der vorhergehenden Ansprüche ausgeführt werden, wenn das Produkt auf der Steuereinheit läuft.

11. Vorrichtung zum Bestimmen von Veränderungen im längsdynamischen Verhalten eines Fahrwerks eines Schienenfahrzeugs zur Identifikation eines aktuellen Fahrzustandes des Schienenfahrzeugs, umfassend eine Steuereinheit und zumindest eine Sensoreinheit zur Bereitstellung eines jeweiligen Messsignals (y), wobei die Steuereinheit dazu ausgebildet ist, mittels eines regelungstechnischen Beobachters (1) aus einem bekannten oder messtechnisch ermittelten Eingangssignal (u) und dem zumindest einen Messsignal (y) des beobachteten Schienenfahrzeugs als beobachtetes reales Referenzsystem (10) durch ein Systemmodell (20) des Schienenfahrzeugs nicht messbare und das längsdynamische Verhalten charakterisierende Größen zu rekonstruieren und auszuwerten, wobei die Steuereinheit weiter dazu ausgebildet ist, das zumindest eine Messsignal (y) des beobachteten Schienenfahrzeugs (10) und ein entsprechendes rekonstruiertes Messsignal (ŷ) des Systemmodells (20) zu vergleichen und die mittels Vergleich ermittelte Abweichung mit einem Regler rekursiv nachzuführen, so dass die ermittelte Abweichung minimiert wird,

wobei die Steuereinheit dazu ausgebildet ist, bei der Auswertung der das längsdynamische Verhalten charakterisierenden Größen einen Vergleich der Größen von aufeinander folgenden Fahrwerken vorzunehmen,
**dadurch gekennzeichnet, dass**
die Steuereinheit weiter dazu ausgebildet ist, durch den Vergleich der Resultate von aufeinanderfolgenden Fahrwerken zu ermitteln, ob Veränderungen im längsdynamischen Verhalten streckenbedingt sind oder fahrzeugseitige Ursachen haben, wobei die Steuereinheit weiter dazu ausgebildet ist, bei Änderungen im längsdynamischen Verhalten, die zeitversetzt an mehreren Fahrwerken auftreten, auf streckenseitige Einflüsse zu schließen, und bei Veränderungen im längsdynamischen Verhalten, die nur bei einzelnen Fahrwerken auftreten, auf fahrzeugseitige Einflüsse des betreffenden Fahrwerks zu schließen.

**Claims**

1. Method for determining changes of the longitudinal dynamic behaviour of an undercarriage of a rail vehicle, in order to identify a current travelling condition of the rail vehicle,

wherein by means of a cybernetic observer (1), from an input signal (u) that is known or that has been determined by measurement technology and at least one measurement signal (y) of the rail vehicle observed as an observed real reference system (10), variables that cannot be measured by a system model (20) of the rail vehicle and that characterise the longitudinal dynamic behaviour are reconstructed and evaluated, wherein the said at least one measurement signal (y) of the rail vehicle (10) observed and a correspondingly reconstructed measurement signal (ỹ) of the system model (20) are compared, and the deviation determined by way of the comparison is recursively tracked with a regulator so as to minimise the deviation determined,

wherein the evaluation of the variables that characterise the longitudinal dynamic behaviour is a comparison of the variables of consecutive undercarriages,

**characterised in that**

by comparing the results of consecutive undercarriages, it is determined whether changes in the longitudinal dynamic behaviour are due to the track or have vehicle-related causes, wherein in case of changes in the longitudinal dynamic behaviour that occur with a time delay at several undercarriages, track-side influences are inferred, and in case of changes in the longitudinal dynamic behaviour that occur at individual undercarriages, vehicle-side influences of the corresponding undercarriage are inferred.

2. Method according to Claim 1, **characterised in that** the input signal (u) is additionally submitted to the system model (20).

3. Method according to either of the preceding claims, **characterised in that** the input signal (u) and/or the at least one measurement signal (y) are detected at one or more of the following components:

- a rail carriage body;
- an undercarriage of the rail vehicle;
- at least one bogie of the rail vehicle;
- at least one set of wheels of the rail vehicle.

4. Method according to Claim 3, **characterised in that** the at least one measurement signal (y) is detected simultaneously on opposite sides of the undercarriage or the bogie or the wheel set.

5. Method according to any of the preceding claims, **characterised in that** as the input signal (u), a brake pressure of a brake actuator or a brake current for producing a braking force that decelerates the rail vehicle is processed.

6. Method according to any of the preceding claims, **characterised in that** as the input signal (u), a driving force or a motor current for producing a force that accelerates the rail vehicle is processed.

7. Method according to any of the preceding claims, **characterised in that** as the at least one measurement signal (y), a rotation speed or rotation speed change of at least one wheel set is processed.

8. Method according to any of the preceding claims, **characterised in that** as the at least one measurement signal (y), an extension of a component that supports a longitudinal force, in particular a push-pull rod or a pivot pin or a lemniscate control arm or a wheel set guide is processed.

9. Method according to any of the preceding claims, **characterised in that** as the at least one measurement signal (y), a spring deflection in one or more suspension stages is processed.

10. Computer program product that can be downloaded directly into the internal memory of a digital control unit and that contains software code sections, by means of which when the said product is running in the control unit, carries out the steps according to any of the preceding claims.

11. Device for determining changes in the longitudinal dynamic behaviour of an undercarriage of a rail vehicle, in order to identify a current travelling condition of the rail vehicle, which device comprises a control unit and at least one sensor unit for providing a respective measurement signal (y), wherein the control unit is designed, by means of a cybernetic observer (1), to reconstruct and evaluate, from an input signal (u) that is known or determined by measurement technology, variables that cannot be measured and that characterise the longitudinal dynamic behaviour as an observed real reference system (10) by way of a system model (20) of the rail vehicle, wherein the control unit is also designed to compare the at least one measurement signal (y) of the rail vehicle (10) observed and a corresponding reconstructed measurement signal (ŷ) of the system model (20), and to track the deviation determined by the comparison recursively with a regulator so as to minimise the deviation determined,

wherein the control unit is designed to carry out a comparison of the variables of consecutive undercarriages when evaluating the variables that characterise the longitudinal dynamic behaviour,

**characterised in that**

the control unit is further designed to determine, by comparing the results of consecutive undercarriages, whether changes in the longitudinal dynamic behaviour are due to the track or have vehicle-side causes, wherein the control unit is further designed to infer track-side influences in the case of changes in the longitudinal dynamic behaviour that occur with a time delay on several undercarriages, and to infer vehicle-side influences of the corresponding undercarriage in the case of changes in the longitudinal dynamic behaviour that only occur on individual undercarriages.

## Revendications

1. Procédé de détermination de changements du comportement dynamique longitudinal des trains de roulement d'un véhicule ferroviaire pour l'identification d'un état de roulement en cours du véhicule ferroviaire,

   où, au moyen d'un observateur (1) de la technique de régulation, on reconstruit et on exploite, à partir d'un signal (u) d'entrée, connu ou déterminé en technique de mesure, et d'au moins un signal (y) de mesure du véhicule ferroviaire observé, comme système (10) de référence réel observé, par un modèle (20) de système du véhicule ferroviaire, des grandeurs non mesurables et caractérisant le comportement dynamique longitudinal, dans lequel on compare le au moins un signal (y) de mesure du véhicule (10) ferroviaire observé à un signal (ŷ) de mesure reconstruit correspondant du modèle (20) du système et on suit récursivement par un régleur l'écart déterminé au moyen de la comparaison de manière à minimiser l'écart déterminé,
   où l'exploitation des grandeurs caractérisant le comportement dynamique longitudinal comprend une comparaison des grandeurs de trains de roulement se succédant,
   **caractérisé en ce que**,
   par la comparaison des résultats de trains de roulement successifs, l'on détermine si des modifications du comportement dynamique longitudinal sont dues à la voie ou ont des causes du côté du véhicule, où, en cas de modifications du comportement dynamique longitudinal apparaissant de manière décalée dans le temps sur plusieurs trains de roulement, l'on conclut à des influences du côté de la voie, et, en cas de modifications du comportement dynamique longitudinal n'apparaissant que sur des trains de roulement individuels, l'on conclut à des influences côté véhicule du train de roulement concerné.

2. Procédé suivant la revendication 1, **caractérisé en ce que** l'on envoie le signal (u) d'entrée en outre, au modèle (20) du système.

3. Procédé suivant l'une des revendications précédentes, **caractérisé en ce que** l'on détecte le signal (u) d'entrée et/ou le signal (y) de mesure sur l'un ou plusieurs des éléments suivants :

   - une caisse ;

   - un train de roulement du véhicule ferroviaire ;
   - au moins un boggie du véhicule ferroviaire ;
   - au moins un essieu du véhicule ferroviaire.

4. Procédé suivant la revendication 3, **caractérisé en ce que** l'on détecte le au moins un signal (y) de mesure en même temps sur des côtés opposés du train de roulement ou du boggie ou de l'essieu.

5. Procédé suivant l'une des revendications précédentes, **caractérisé en ce que** l'on traite comme signal (u) d'entrée une pression de frein d'un actionneur de frein ou un courant de frein pour la production d'une force de freinage ralentissant le véhicule ferroviaire.

6. Procédé suivant l'une des revendications précédentes, **caractérisé en ce que** l'on traite comme signal (u) d'entrée une force d'entraînement ou un courant de moteur pour la production d'une force accélérant le véhicule ferroviaire.

7. Procédé suivant l'une des revendications précédentes, **caractérisé en ce que** l'on traite comme au moins un signal (y) de mesure une vitesse en rotation ou une variation de vitesse de rotation d'au moins un essieu.

8. Procédé suivant l'une des revendications précédentes, **caractérisé en ce que** l'on traite comme au moins un signal (y) de mesure une dilatation d'une pièce transmettant une force longitudinale, notamment d'une tige de traction/compression ou d'un tourillon ou d'une biellette lemniscate ou d'un guidage d'essieu.

9. Procédé suivant l'une des revendications précédentes, **caractérisé en ce que** l'on traite comme au moins un signal (y) de mesure une course élastique dans un ou dans plusieurs étages de suspension.

10. Produit de programme d'ordinateur, que l'on peut charger directement dans la mémoire interne d'une unité de commande numérique et qui comprend des parties de code logicielles par lesquelles les stades suivant l'une des revendications précédentes sont exécutés, lorsque le produit passe sur l'unité de commande.

11. Installation de détermination de changement du comportement dynamique longitudinal d'un train de roulement d'un véhicule ferroviaire pour l'identification d'un état de roulement en cours du véhicule ferroviaire comprenant une unité de commande et au moins une unité de capteur pour disposer d'un signal (y) de mesure respective, dans laquelle l'unité de commande est constituée pour, au moyen d'un observateur (1) de la technique de régulation, reconstruire et exploiter, à partir d'un signal (u) d'entrée, connu ou déterminé en technique de mesure, et d'au moins un signal (y) de mesure du véhicule ferroviaire observé, comme système (10) de référence réel observé, par un modèle (20) de système du véhicule ferroviaire, des grandeurs non mesurables et caractérisant le comportement dynamique longitudinal, l'unité de commande état constituée, en outre, pour comparer le au moins un signal (y) de mesure du véhicule (10) ferroviaire observé à un signal (ŷ) de mesure reconstruit correspondant du modèle du système, et pour suivre récursivement par un régleur l'écart déterminé au moyen de la comparaison de manière à minimiser l'écart déterminé,

où l'unité de commande est conçue pour effectuer, lors de l'exploitation des grandeurs caractérisant le comportement dynamique longitudinal, une comparaison des grandeurs de trains de roulement successifs,
**caractérisé en ce que**,
l'unité de commande est conçue pour déterminer par la comparaison des résultats de trains de roulement successifs, si des modifications du comportement dynamique longitudinal sont dues à la voie ou ont des causes côté véhicule, où l'unité de commande est en outre conçue pour conclure, en cas de modifications du comportement dynamique longitudinal se produisant de manière décalée dans le temps sur plusieurs trains de roulement, à des influences côté voie, et en cas de modifications du comportement dynamique longitudinal se produisant uniquement sur des trains de roulement individuels, à des influences côté véhicule du train de roulement concerné.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011113093 A1
- WO 2015128147 A1
- WO 2015136117 A1
- WO 2006113954 A1
- DE 102012004892 A1
- US 20070001629 A1